# EUROPÄISCHE PATENTSCHRIFT

(11) **EP 2 050 994 B1**
(45) Veröffentlichungstag und Bekanntmachung des Hinweises auf die Patenterteilung: **05.01.2011**
(21) Anmeldenummer: 08017893.2
(22) Anmeldetag: 13.10.2008
(51) Int. Cl.: F16L 21/06, F16L 21/08

(54) **Rohrverbindung**
Pipe connection
Raccord de tuyau

(30) Priorität: 16.10.2007 DE 102007049996
(43) Veröffentlichungstag der Anmeldung: 22.04.2009
(73) Patentinhaber: Vahlbrauk, Wolfgang Dipl.-Ing., 37581 Bad Gandersheim (DE)
(72) Erfinder: Vahlbrauk, Wolfgang Dipl.-Ing., 37581 Bad Gandersheim (DE)
(74) Vertreter: Lins, Edgar

(56) Entgegenhaltungen:
- EP-A- 0 211 158
- EP-A- 1 273 842
- WO-A-03/033956
- WO-A-03/071178
- DE-A1- 4 040 638
- DE-A1- 10 009 200
- DE-U1- 29 814 927

## Beschreibung

Die Erfindung betrifft eine Rohrverbindung eines ersten Rohrendes mit einem zweiten Rohrende, mit einem den Zwischenraum zwischen den Rohrenden abdichtenden Dichtring und einer spannbaren, die Rohrenden übergreifenden Rohrschelle, in der ein gezahnter, Ankerring gelagert ist, der beim Anziehen der Rohrschelle seine gezahnte Innenseite gegen die Oberfläche des zweiten Rohrendes presst, wobei das erste Rohrende muffenförmig so aufgeweitet ist, dass das zweite Rohrende in die Aufweitung einschiebbar ist, die Rohrschelle eine Innenkontur aufweist, die die muffenförmige Aufweitung des ersten Rohrendes formschlüssig gegen eine Auszugsrichtung für das Lösen der Rohrenden voneinander übergreift und der Ankerring in einem Spannring mit einem zur Innenseite hin offenen U-förmigen Querschnitt gelagert ist.

Derartige Rohrverbindungen werden insbesondere dann eingesetzt, wenn im Innern der Rohrleitung ein vom Umgebungsdruck deutlich abweichender Druck entsteht. Bei einem Überdruck in der Rohrleitung, die aus mehreren über eine Rohrverbindung miteinander verbundenen Rohrstücken besteht, besteht die Tendenz, durch den Fluiddruck die durch die Rohrverbindung miteinander verbundenen Rohre auseinander zu drücken und so die Verbindung zwischen den Rohrstücken zu lösen.

Eine aus EP 0 211 158 B1 bekannte Rohrkupplung weist eine Rohrschelle auf, innerhalb derer zwei Rohrenden mit gleichem Durchmesser stumpf aneinander stoßen, wobei die dadurch gebildete Fuge von einer sich axial beidseitig der Fuge erstreckenden, mit der Rohrschelle angedrückten Dichtung abgedichtet gehalten wird. Für eine kraftschlüssige Verbindung zwischen der Rohrschelle und den beiden Rohrenden befindet sich an beiden axialen Enden der Rohrschelle ein Ankerring, der gegenüber dem Rohrende schräg gestellt ist und mit einer mit Zähnen versehenen Innenkante durch die Rohrschelle gegen die Oberfläche des Rohrstücks gedrückt wird, sodass sich die Zähne etwas in die Oberfläche des betreffenden Rohrstücks eingraben.

Eine ähnliche Rohrverbindung, jedoch mit speziell konfigurierten Zähnen des Ankerrings, ist aus EP 1 440 270 B1 bekannt.

Eine Rohrverbindung der eingangs erwähnten Art ist durch WO 03/071178 A1 bekannt. Ein erstes Rohrende ist dabei muffenförmig aufgeweitet und auf seiner Innenwandung mit einer Gummidichtung beschichtet. In dieses aufgeweitete erste Rohrende ist ein glattes zweites Rohrende einsteckbar, wobei die Abdichtung durch die Gummidichtung bewirkt wird. Zur Herstellung einer festen Verbindung zwischen den beiden Rohrenden ist in die Rohrschelle, deren Innenkontur an die muffenförmige Erweiterung des ersten Rohrendes angepasst ist und daher eine axiale formschlüssige Auszugssicherung darstellt ein Spannring mit einem darin eingesetzten gezahnten Ankerring eingebracht, dessen Zähne widerhakenartig beim Spannen der Rohschelle gegen die Oberfläche des zweiten Rohrendes gedrückt werden. Diese Rohrverbindung ist für eine hochstabile Auszugsverhinderung des zweiten Rohrendes aus dem ersten Rohrende geeignet, nicht jedoch für die Verwendung hoher Drücke, da eine Gummibeschichtung für eine Dichtung bei hohen Drücken nicht geeignet ist.

Durch EP 1 273 842 A2 ist ferner eine Muffenverbindung zwischen Rohrenden bekannt, bei der das muffenförmig aufgeweitete erste Rohrende in einem radial nach außen gerichteten Ringflansch endet, über den eine etwa U-förmige Profilschelle greift. In der Profilschelle ist ein gezahnter Ankerring schräg gelagert, der durch die Rohrschelle mit seinen Zähnen gegen die Oberfläche des glatten zweiten Rohrendes gedrückt wird. In der muffenförmigen Aufweitung des ersten Rohrendes ist ein O-Ring als ringförmige Dichtung eingelegt. Diese Muffenverbindung ist für Hochdruckanwendungen innerhalb der Rohrleitung weder vorgesehen noch geeignet. Durch DE 100 09 200 A1 ist eine Rohrverbindung bekannt, bei der ein Dichtring die freie Endkante des muffenförmig aufgeweiteten Rohrendes mit einem Wulst übergreift, die Auszugssicherung wird dabei mit einem Spannkörper angestrebt, der durch die Rohrschelle gegen die Oberfläche des zweiten Rohrendes gedrückt wird. Eine hohe Auszugsfestigkeit ist auf diese Weise für die Rohrverbindung nicht möglich.

Der vorliegenden Erfindung liegt die Aufgabe zugrunde, eine Rohrverbindung der eingangs erwähnten Art so auszubilden, dass sie einfach zu handhaben ist, eine erhöhte Druckfestigkeit ermöglicht und eine hohe mechanische Stabilität gegen das Lösen der Rohrenden voneinander aufweist.

Zur Lösung dieser Aufgabe ist erfindungsgemäß eine Rohrverbindung der eingangs erwähnten Art **dadurch gekennzeichnet, dass** der Dichtring zur Aufnahme einer freien Kante des ersten Rohrendes geformt ist und die freie Kante mit einem Wulst übergreift und dass ein Formring vorgesehen ist, der sich in axialer Richtung einerseits an dem den Ankerring lagernden Spannring abstützt und andererseits unmittelbar an dem Dichtring anliegt.

Die erfindungsgemäße Rohrverbindung kommt mit einem einzigen Ankerring aus, der auf das zweite Rohrende einwirkt, das in die muffenförmige Aufweitung des ersten Rohrendes eingeschoben ist. Das Zusammenhalten der beiden Rohrenden durch die Rohrschelle erfolgt somit durch einen formschlüssigen Angriff an dem ersten Rohrende im Bereich der muffenförmigen Aufweitung und durch einen kraftschlüssigen Angriff mittels des Ankerrings an dem glatten weiten Rohrende, und zwar in dem Bereich, der aus dem ersten Rohrende gerade herausragt.

Das Halten des ersten Rohrendes durch die Rohrschelle ist relativ unkritisch, weil das Halten des ersten Rohrendes in seiner Position durch den Formschluss mit der muffenförmigen Aufweitung nicht von einem bestimmten Anpressdruck durch die Rohrschelle in kritischer Weise abhängt. Das Anziehen der Rohrschelle kann daher unproblematisch so dosiert werden, dass die Haltefunktion durch den Ankerring gewährleistet ist.

Der Ankerring ist in einem Spannring mit einem zur Innenseite hin offenen U-förmigen Querschnitt gelagert. Der Spannring erstreckt sich nicht über den vollen Umfang der Rohrschelle, sondern weist eine Lücke auf, sodass er zum Zwecke des Spannens mit der Rohrschelle zusammengepresst werden kann. Der Ankerring kann in ähnlicher Weise ausgebildet sein, besteht jedoch vorzugsweise aus einem Ring mit freien, sich überlappenden Enden, sodass auch der Ankerring radial durch die Rohrschelle über den Spannring zusammenpressbar ist und dabei auf seinem vollen Umfang mit die Oberfläche des Rohrendes beaufschlagenden Zähnen bestückt ist.

Der Ankerring ist vorzugsweise schräg gelagert, und zwar vorzugsweise entgegen der Auszugsrichtung des zweiten Rohrendes, wie sie sich beim Herausziehen des zweiten Rohrendes aus dem ersten Rohrende ergibt. Die Zähne des Ankerrings sind daher näher zum ersten Rohrende angeordnet als die radial äußere Basis des Ankerrings, die sich an der Rohrschelle abstützt, wobei diese Abstützung an der Rohrschelle vorzugsweise über den Spannring erfolgt.

Für die Abdichtung des Zwischenraums zwischen den beiden Rohrenden ist ein Dichtring und ein Formring vorgesehen, wobei der Dichtring die freie Kante der muffenförmigen Aufweitung des ersten Rohrstücks übergreift. Der Formring wird durch den Spannring nach radial innen gedrückt, und zwar an der Fuge, die sich an der freien Kante des ersten Rohrstücks bildet, nachdem das zweite Rohrstück in das erste Rohrstück eingeschoben ist. Der Dichtring liegt dabei unmittelbar am Formring an. Formring und Dichtring sind an den aneinander stoßenden Kanten vorzugsweise komplementär zueinander geformt.

Erfindungsgemäß stützt sich der Formring in axialer Richtung an dem den Ankerring lagernden Spannring ab.

Die für die erfindungsgemäße Rohrverbindung benötigte Rohrschelle besteht vorzugsweise aus zwei miteinander verbundenen Halbschalen. Die Verbindung der Halbschalen kann dabei in einer Klappverbindung bestehen, die ein Aufklappen der Halbschalen zum Montieren über den Rohrenden ermöglicht. Die Halbschalen können aber auch vollständig voneinander trennbar und beispielsweise durch Schrauben miteinander verbindbar sein. In beiden Ausführungsformen wird das Schließen und Spannen der Rohrschelle vorzugsweise durch Anziehen der Halbschalen gegeneinander mittels einer Verschraubung vorgenommen. Die Verschraubung befindet sich dabei vorzugsweise an Ansatzflanschen der Halbschalen, in dem ein Schraubbolzen durch entsprechende Durchgangsöffnungen der Ansatzflansche hindurchgesteckt und mittels einer Mutter gespannt wird. Eine etwaige Klappverbindung der Halbschalen miteinander kann dabei durch ein Ineinanderstecken geeignet geformter Ansätze der beiden Halbschalen erfolgen. Einfacher ist es jedoch, auch auf der zweiten Seite Zusatzflansche vorzusehen, die durch eine Verschraubung miteinander verbunden werden.

Die muffenartige Aufweitung des ersten Rohrendes besteht vorzugsweise in an sich bekannter Weise aus einem zylindrischen, gegenüber dem Rohrdurchmesser des Rohrendes vor der Aufweitung erweiterten Abschnitt, der in einem demgegenüber nochmals erweiterten tulpenförmigen Abschnitt übergeht, der mit einer gegenüber dem maximalen Durchmesser des tulpenförmigen Abschnitts einen kleineren Durchmesser aufweisenden freien Kante abgeschlossen ist. Bei einer derartigen Ausbildung der muffenartigen Aufweitung umgreift die Rohrschelle vorzugsweise den Übergang vom zylindrischen erweiterten Abschnitt in den tulpenförmig erweiterten Abschnitt. Vorzugsweise ist die Rohrschelle ferner mit einer ringförmig umlaufenden Nut am zum zweiten Rohrende zeigenden Ende versehen, in der der Spannring mit seinem U-förmigen Querschnitt eingesetzt werden kann.

Die Erfindung soll im Folgenden anhand eines in der Zeichnung dargestellten Ausführungsbeispiels näher erläutert werden. Es zeigen:
- Figur 1: eine Ansicht mit einem Teilschnitt einer Rohrverbindung zwischen zwei Rohrenden;
- Figur 2: eine axiale Draufsicht auf die Rohrverbindung mit Angabe der Schnittli- nie für Figur 1.

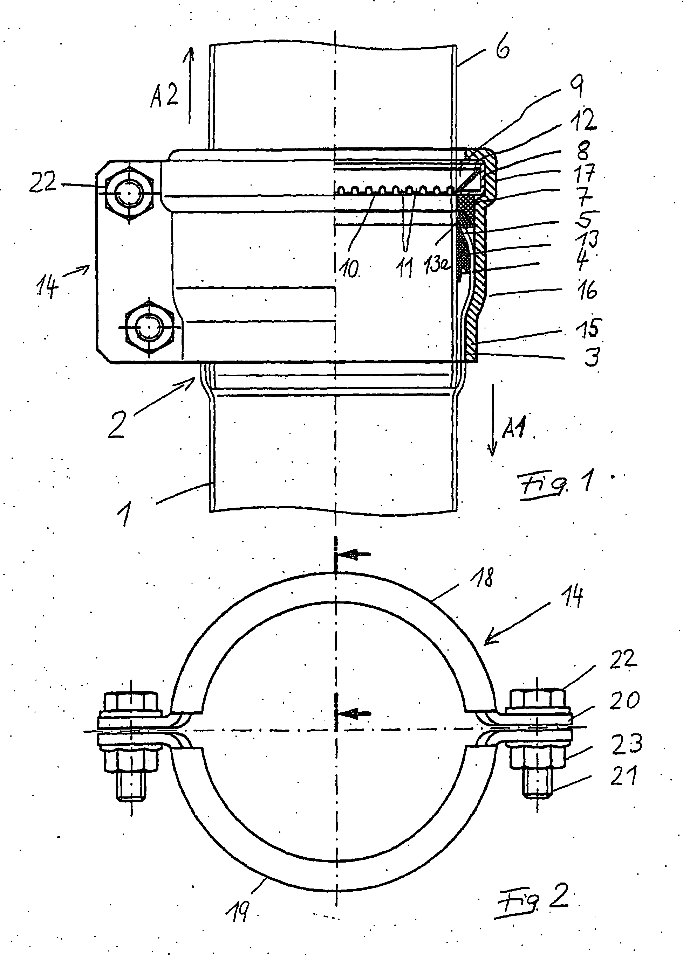

Figur 1 lässt ein erstes Rohrende 1 erkennen, das mit einer muffenförmigen Aufweitung 2 versehen ist. Die muffenförmige Aufweitung 2 besteht aus einem zylindrischen Abschnitt 3, der einem gegenüber dem Durchmesser des Rohrendes 1 außerhalb der Aufweitung 2 vorhandenen Durchmesser etwas vergrößerten Durchmesser aufweist. An den zylindrischen Abschnitt 3 schließt sich ein tulpenförmiger Abschnitt 4 an, der einen gegenüber dem zylindrischen Abschnitt 3 erneut aufgeweiteten Bereich aufweist und durch eine nach radial innen gerichtete freie Kante 5 abgeschlossen ist. Der Durchmesser der freien Kante 5 entspricht etwa dem Durchmesser des zylindrischen Abschnitts 3.

In die muffenförmige Aufweitung 2 ist ein zweites, glattes Rohrende 6 eingeschoben. Vor dem Einschieben des zweiten Rohrendes 6 ist auf dieses ein Formring 7, ein Spannring 8 in Form eines nach radial innen offenen U-förmigen Profils und ein Ankerring 9 aufgeschoben. Der Ankerring 9 ist in dem Spannring 8 gelagert. Der Ankerring 9 weist an seiner zum ersten Rohrende 1 zeigenden Kante 10 gleichmäßig beabstandete Zähne 11 auf, die im montierten Zustand an der Oberfläche des zweiten Rohrendes 6 unter Druck anliegen. Der Ankerring 9 erstreckt sich von der Kante 10 schräg nach radial außen und stützt sich mit einer glatten Kante 12 am Boden des Spannrings 8 ab.

Der Formring 7 ist an seiner zum ersten Rohrende 1 zeigenden Ende komplementär zu einem profilierten Dichtring 13 ausgebildet, der zur Aufnahme der freien Kante 5 des ersten Rohrendes 1, geformt ist. Der Dichtring 13 übergreift die freie Kante 5 des ersten Rohrendes 1 mit einem dreieckförmigen Wulst 13a und liegt mit seinem anderen Ende über eine axiale Länge an dem zweiten Rohrende 6 an. Er ist so geformt, dass er sich zu seinem freien Ende hin verdickt, sodass er durch den tulpenförmigen Abschnitt 4 nach radial innen gegen das zweite Rohrende 6 gepresst wird.

Der Dichtring 13 wird durch den Formring 7, an dem er anliegt, in seiner Position auch bei hohen Drücken gehalten.

Die Rohrverbindung wird durch eine spannbare Rohrschelle 14 gesichert, die mit einem zylindrischen Abschnitt 15 im montierten und gespannten Zustand an dem zylindrischen Abschnitt 3 anliegt. Die Rohrschelle 14 weist eine zylindrische Aufweitung 16 auf, in der der tulpenförmige Abschnitt 4 des ersten Rohrendes 1 aufgenommen werden kann. Der aufgeweitete zylindrische Abschnitt 16 geht in einen Endabschnitt 17 über, der eine ringförmige, nach radial innen offene Nut zur Aufnahme des Spannrings 8 ausbildet.

Wie Figur 2 erkennen lässt, ist die Rohrschelle 14 durch zwei Halbschalen 18, 19 gebildet, die jeweils an ihren Enden mit nach radial außen abstehenden Ansatzflanschen 20 versehen sind. Die Ansatzflansche 20 sind mit (nicht dargestellten) Durchgangslöchern versehen, durch die ein Bolzen 21 einer Schraube 22 hindurchsteckbar ist. Die Spannung der Rohrschelle 14 erfolgt mittels einer Mutter 23, die auf der dem Schraubenkopf 22 entgegengesetzten Seite auf den Schraubbolzen 21 aufschraubbar ist.

Figur 2 lässt erkennen, dass die Verschraubung der zueinander gehörenden Ansatzflansche 20 mit jeweils zwei Schrauben 22 erfolgt.

Durch das Spannen der Rohrschelle 14 wird der Spannring 8 nach radial innen gedrückt. Dadurch wird auch der Ankerring 9 mit den am Umfang des glatten zweiten Rohrendes 6 anliegenden Zähnen 11 nach radial innen gedrückt, wodurch sich die Zähne 11 in der Oberfläche des zweiten Rohrendes 6 verkrallen. Der Formring 7 liegt mit einer radial inneren Fläche flächig an dem zweiten Rohrende 6 unmittelbar unterhalb der Zähne 11 des Ankerrings 9 dichtend an und hält den an ihm anliegenden Dichtring 13.

Es ist erkennbar, dass bei dieser Rohrverbindung das erste Rohrende 1 gegen ein Verschieben in seine Auszugsrichtung A1, die ein Lösen der Verbindung zwischen dem ersten Rohrende 1 und dem zweiten Rohrende 6 bewirken würde, durch den Formschluss der Rohrschelle 14 gehindert ist.

Das zweite Rohrende 6 wird an einer Bewegung in seine Auszugsrichtung A2, die einem Herausziehen des zweiten Rohrendes 6 aus dem ersten Rohrende 1 entsprechen würde, durch den widerhakenartig schräg gestellten Ankerring 9 gehindert, dessen Zähne 11 sich in die Oberfläche des zweiten Rohrendes 6 eindrücken.

Das Lösen der Rohrverbindung wird somit auf Seiten des ersten Rohrendes 1 mittels eines Formschlusses, der durch den Übergang der Abschnitte 15, 16 der Rohrschelle 14 in Verbindung mit dem zylindrischen Abschnitt 3 und dem sich anschließenden tulpenförmigen Abschnitt 4 des ersten Rohrendes 1 gebildet wird, und auf Seiten des zweiten Rohrendes 6 mittels des Kraftschlusses über die Zähne 11 des Ankerrings 9 verhindert.

Die erfindungsgemäße Rohrverbindung ermöglicht eine einfache und aufgrund des Formschlusses auch präzise Positionierung der Rohrschelle 14. Durch die muffenartige Aufweitung 2 des ersten Rohrendes wird auch eine präzise Positionierung des zweiten Rohrendes 6 relativ zum ersten Rohrende 1 gewährleistet, da das zweite Rohrende 6 bis zum Anschlag in das erste Rohrende 1 einschiebbar ist. Die vorzugsweise zweiteilig ausgebildete Rohrschelle 14 kann anschließend unproblematisch aufgebracht werden, wobei die vorher aufgeschobenen Bauelemente Formring 7 und Spannring 8 mit dem eingelegten Ankerring 9 unproblematisch durch die entsprechende Formgebung der Rohrschelle 14 korrekt positioniert werden. Hierbei hilft auch die Anlage des Formrings 7 mit einer glatten Anlagefläche an der axial benachbarten Profil-Seitenwand des Spannrings 8. Die korrekte Positionierung des Dichtrings 13 ist dadurch gewährleistet, dass er vor dem Zusammenstecken der Rohrenden 1, 6 auf die freie Kante 5 des ersten Rohrendes 1, die er übergreift, aufgeschoben wird.

Die erfindungsgemäße Rohrverbindung ist für eine hohe Druckbelastung geeignet und hält dieser Druckbelastung zuverlässig stand.

## Patentansprüche

1. Rohrverbindung eines ersten Rohrendes (1) mit einem zweiten Rohrende (6), mit einem den Zwischenraum zwischen den Rohrenden (1, 6) abdichtenden Dichtring (13) und einer spannbaren, die Rohrenden (1, 6) übergreifenden Rohrschelle (14), in der ein gezahnter Ankerring (9) gelagert ist, der beim Anziehen der Rohrschelle (14) seine gezahnte Innenseite (10) gegen die Oberfläche des zweiten Rohrendes (6) presst, wobei das erste Rohrende (1) muffenförmig so aufgeweitet ist, dass das zweite Rohrende (6) in die Aufweitung (2) einschiebbar ist, die Rohrschelle (14) eine Innenkontur aufweist, die die muffenförmige Aufweitung (2) des ersten Rohrendes (1) formschlüssig gegen eine Auszugsrichtung (A1) für das Lösen der Rohrenden (1, 6) voneinander übergreift und der Ankerring (9) in einem Spannring (8) mit einem zur Innenseite hin offenen U-förmigen Querschnitt gelagert ist, **dadurch gekennzeichnet, dass** der Dichtring (13) zur Aufnahme einer freien Kante (5) des ersten Rohrendes (1) geformt ist und die freie Kante (5) mit einem Wulst (13a) übergreift und dass ein Formring (7) vorgesehen ist, der sich in axialer Richtung einerseits an dem den Ankerring (9) lagernden Spannring (8) abstützt und andererseits unmittelbar an dem Dichtring (13) anliegt.

2. Rohrverbindung nach Anspruch 1, **dadurch gekennzeichnet, dass** der Ankerring (9) schräg entgegen der Auszugsrichtung (A2) des zweiten Rohrendes (6) für das Lösen der Rohrverbindung gelagert ist.

3. Rohrverbindung nach Anspruch 1 oder 2, **dadurch gekennzeichnet, dass** die Rohrschelle (14) aus zwei miteinander verbundenen Halbschalen (18, 19) besteht.

4. Rohrverbindung nach Anspruch 3, **dadurch gekennzeichnet, dass** die Halbschalen (18, 19) Ansatzflansche (20) aufweisen, die mit einer Verschraubung zum Schließen der Rohrschelle (14) gegeneinander ziehbar sind.

5. Rohrverbindung nach Anspruch 4, **dadurch gekennzeichnet, dass** die Halbschalen (18, 19) jeweils zwei Ansatzflansche (20) aufweisen, die mit jeweils einer Verschraubung gegen die Ansatzflansche (20) der anderen Halbschale (18, 19) ziehbar sind.

6. Rohrverbindung nach Anspruch 4 oder 5, **dadurch gekennzeichnet, dass** jede Verschraubung mit zwei Schrauben (22) gebildet ist.

7. Rohrverbindung nach einem der Ansprüche 1 bis 6, **dadurch gekennzeichnet, dass** die muffenartige Aufweitung (2) des ersten Rohrendes (1) einen zylindrischen, gegenüber dem Rohrdurchmesser des Rohrendes (1) vor der Aufweitung (2) erweiterten Abschnitt (3) aufweist, der in einen demgegenüber nochmals erweiterten tulpenförmigen Abschnitt (4) übergeht, der mit der gegenüber dem maximalen Durchmesser des tulpenförmigen Abschnitts (4) einen kleineren Durchmesser aufweisenden freien Kante (5) abgeschlossen ist.

8. Rohrverbindung nach einem der Ansprüche 1 bis 7, **dadurch gekennzeichnet, dass** der Formring (7) und der Dichtring (13) an den aneinander stoßenden Kanten komplementär zueinander geformt sind.

## Claims

1. Pipe connection for connecting a first pipe end (1) to a second pipe end (6), with a sealing ring (13) sealing the intermediate space between the pipe ends (1, 6), and a tensible pipe clamp (14) which fits over the pipe ends (1, 6) and in which a toothed anchoring ring (9) is mounted, said anchoring ring pressing the toothed inside (10) thereof against the surface of the second pipe end (6) when the pipe clamp (14) is tightened, the first pipe end (1) being widened in a sleeve-shaped manner such that the second pipe end (6) can be pushed into the widened portion (2), the pipe clamp (14) having an internal contour which fits over the sleeve-shaped widened portion (2) of the first pipe end (1) in a form-fitting manner counter to a pull-out direction (A1) for releasing the pipe ends (1, 6) from each other, and the anchoring ring (9) being mounted in a tensioning ring (8) having a U-shaped cross section which is open towards the inside, **characterized in that** the sealing ring (13) is shaped to receive a free edge (5) of the first pipe end (1) and fits over the free edge (5) by means of a bead (13a), and **in that** a shaped ring (7) is provided, the shaped ring being supported in the axial direction on one side on the tensioning ring (8) supporting the anchoring ring (9) and bearing on the other side directly against the sealing ring (13).

2. Pipe connection according to Claim 1, **characterized in that** the anchoring ring (9) is mounted obliquely counter to the pull-out direction (A2) of the second pipe end (6) for releasing the pipe connection.

3. Pipe connection according to Claim 1 or 2, **characterized in that** the pipe clamp (14) comprises two half shells (18, 19) which are connected to each other.

4. Pipe connection according to Claim 3, **characterized in that** the half shells (18, 19) have neck flanges (20) which can be pulled towards each other with a screw connection in order to close the pipe clamp (14).

5. Pipe connection according to Claim 4, **characterized in that** the half shells (18, 19) each have two neck flanges (20) which can be pulled against the neck flanges (20) of the other half shell (18, 19) by means of a respective screw connection.

6. Pipe connection according to Claim 4 or 5, **characterized in that** each screw connection is formed by two screws (22).

7. Pipe connection according to one of Claims 1 to 6, **characterized in that** the sleeve-like widened portion (2) of the first pipe end (1) has a cylindrical section (3) which is expanded in relation to the pipe diameter of the pipe end (1) upstream of the widened portion (2) and merges into a tulip-shaped section (4) which is expanded again in relation thereto and is terminated by a free edge (5) which has a smaller diameter than the maximum diameter of the tulip-shaped section (4).

8. Pipe connection according to one of Claims 1 to 7, **characterized in that** the shaped ring (7) and the sealing ring (13) are shaped in a complementary manner with respect to each other at the mutually abutting edges.

## Revendications

1. Raccord de tuyau d'une première extrémité de tuyau (1) avec une deuxième extrémité de tuyau (6), avec un joint annulaire (13) réalisant l'étanchéité dans l'espace entre les extrémités de tuyau (1, 6) et avec une coquille tubulaire (14) expansible enserrant les deux extrémités de tuyau (1, 6) dans laquelle est disposé un anneau denté d'ancrage (9), lequel appuie sa face intérieure dentelée contre la surface de la deuxième extrémité de tube (6) lorsque la coquille tubulaire (14) est mise en place, dans lequel la première extrémité de tuyau (1) est élargie en forme de manchon de façon à ce que la deuxième extrémité de tuyau (6) puisse s'insérer dans l'élargissement (2), la coquille tubulaire (14) présente un profil intérieur qui enserre l'élargissement manchonné (2) de la première extrémité de tuyau (1) en un engagement de forme s'opposant à une direction d'extraction (A1) pour la séparation des extrémités de tuyau (1, 6) l'une de l'autre et l'anneau d'ancrage (9) est logé dans un anneau expansible (8) avec une section transversale en forme de U ouvert vers sa face intérieure, **caractérisé en ce que** le joint annulaire (13) est formé pour accueillir le bord libre (5) de la première extrémité de tuyau (1) et enserre le bord libre (5) par un bourrelet (13a) et **en ce qu'**il est prévu un anneau en forme (7) qui s'appuie d'un côté sur l'anneau expansif (8) recevant l'anneau d'ancrage (9) dans une direction axiale et de l'autre côté repose directement sur le joint annulaire (13).

2. Raccord de tuyau selon la revendication 1, **caractérisé en ce que** l'anneau d'ancrage (9) est monté façon oblique en sens inverse de la direction d'extraction (A2) de la deuxième extrémité de tuyau (6) pour le démontage du raccord de tuyau.

3. Raccord de tuyau selon l'une des revendications 1 ou 2, **caractérisé en ce que** la coquille tubulaire (14) est constituée de deux demi coques (18, 19) reliées l'une à l'autre.

4. Raccord de tuyau selon la revendication 3, **caractérisé en ce que** les demi coques (18, 19) présentent des pattes saillantes (20) qui peuvent être serrées l'une contre l'autre par boulonnage pour la fermeture de la coque tubulaire (14).

5. Raccord de tuyau selon la revendication 4, **caractérisé en ce que** les demi coques (18, 19) présentent chacune deux pattes saillantes (20), qui peuvent être serrées chacune par boulonnage contre la patte saillante (20) de l'autre demi coque (18, 19).

6. Raccord de tuyau selon l'une des revendications 4 ou 5, **caractérisé en ce que** chaque boulonnage est réalisé par deux boulons (22).

7. Raccord de tuyau selon l'une des revendications 1 à 6, **caractérisé en ce que** l'élargissement manchonné (2) de la première extrémité de tuyau (1) présente une section cylindrique élargie par rapport au diamètre de l'extrémité du tuyau (1) avant l'élargissement, laquelle section continue en une forme tulipée (4) encore élargie par rapport à la précédente, qui est refermée par un bord libre (5) présentant un diamètre plus petit que le diamètre maximal de la section tulipée (4).

8. Raccord de tuyau selon l'une des revendications 1 à 7, **caractérisé en ce que** l'anneau en forme (7) et le joint annulaire (13) sont formés de façon à être complémentaires entre eux par leurs bords libres en bout à bout.
